Europäisches Patentamt

European Patent Office

Office européen des brevets

(11) Veröffentlichungsnummer: **0 056 064**
**B1**

(12) **EUROPÄISCHE PATENTSCHRIFT**

(45) Veröffentlichungstag der Patentschrift: **10.10.90**

(21) Anmeldenummer: **81100098.3**

(22) Anmeldetag: **08.01.81**

(51) Int. Cl.⁵: **G 06 K 19/06**

(54) **Schaltungseinheit.**

(43) Veröffentlichungstag der Anmeldung:
**21.07.82 Patentblatt 82/29**

(45) Bekanntmachung des Hinweises auf
die Patenterteilung:
**10.10.90 Patentblatt 90/41**

(84) Benannte Vertragsstaaten:
**AT BE CH FR GB IT LI LU NL SE**

(56) Entgegenhaltungen:
EP-B-0 166 087
DE-A-1 945 777
DE-A-2 659 573
DE-A-3 047 322
DE-C-3 721 822
US-A-3 637 994
US-A-3 869 082
US-A-3 971 916
US-A-3 978 320

(73) Patentinhaber: **GAO Gesellschaft für
Automation und Organisation mbH
Euckenstrasse 12
D-8000 München 70 (DE)**

(72) Erfinder: **Gröttrup, Helmut
Wertherstrasse 14
D-8000 München 40 (DE)**
Erfinder: **Maurer, Thomas
Apolloweg 12
D-8000 München 60 (DE)**

(74) Vertreter: **Klunker, Hans-Friedrich, Dr. et al
Patentanwälte Klunker . Schmitt-Nilson . Hirsch
Winzererstrasse 106
D-8000 München 40 (DE)**

Courier Press, Leamington Spa, England.

**Beschreibung**

Die Erfindung betrifft eine Identifikationskarte mit einer auf einem Halbleitersubstrat monolithisch integrierten Schaltung zur Verarbeitung elektrischer Signale mit optoelektronischen Kopplungselementen zur Kommunikation mit einem Prüf- bzw. Kontrollgerät, sowie ein Verfahren zum Ein- oder Auslesen von Informationen in bzw. aus der integrierten Schaltung der Identifikationskarte.

Schaltungseinheiten in Form integrierter Kreise werden heute in der Mehrzahl auf einem einzigen Halbleiterchip (Substrat) realisiert. Diese Halbleiterchips besitzen an ihren Rändern metallisierte Anschlußpunkte, über die sie über geeignete Schweiß- oder Lötverfahren über Drähte mit den Anschlußstellen des sie umgebenden Gehäuses oder direkt mit der umgebenden Schaltung verbunden werden können.

Es gibt Anwendungen, in denen die galvanische Verbindung des Halbleiterchips mit seiner Umgebung unerwünscht ist. So ist z.B. vorgeschlagen worden (DE-OS 26 59 573), Identifikationskarten mit Halbleiterchips auszurüsten, um hierdurch ihre Nachahmungssicherheit zu verbessern, zugleich eine Vielzahl von Informationen in der Identifikationskarte zu speichern und gegebenenfalls diese Informationen im Zusammenwirken mit Sendern und Empfängern in einem kontrollierenden Gerät zu verändern.

Die Einbringung von Schaltungseinheiten in Identifikationskarten macht Schwierigkeiten, weil die Karten im Gebrauch mechanischen Beanspruchungen unterliegen und hierdurch besonders die galvanischen Verbindungen zwischen der Schaltungseinheit und den auf der Karte befindlichen Anschlußpunkten zerstört werden können. Auch die Einbringung der Schaltungseinheiten in Identifikationskarten ist aufgrund der gegen mechanische Beanspruchungen empfindlichen Anschlußleitungen erschwert.

Es wurde daher bereits vorgeschlagen (DE-OS 19 45 777), die für die Datenaufnahme und Datenausgabe zuständigen Kopplungselemente ohne Anschlußleitungen direkt auf dem Halbleiterchip anzuordnen, die in einem sogenannten "Identifikaten", beispielsweise zur Identifizierung von Personen, untergebracht sind. Die Daten werden dabei über Lichtleiterbündel übertragen, die kongruent zu den Kopplungselementen auf die Schaltungseinheit aufgesetzt werden müssen. Die Energie wird kapazitiv über entsprechende metallische Flächen übertragen, die auf der Außenfläche des Identifikanten aufgebracht sind. Die Flächen sind durch Anschlußleitungen mit dem Halbleiterchip verbunden, womit sich die schon oben genannten Schwierigkeiten ergeben.

Der Gedanke, die Kommunikation mit dem integrierten Schaltkreis in einem Identifikationselement über optoelektronische Elemente zu bewerkstelligen, taucht in der Patentliteratur vielfach auf. Dabei werden als Träger für den integrierten Schaltkreis auch Kredit- oder Ausweiskarten beschrieben die schon zum Teil der für diese Karten gültigen Norm entsprechen, siehe dazu zum Beispiel US-A 3,637,944 und die US-A-3 971 916. Sowohl bei diesen Druckschriften als auch bei anderen bekannten Lösungen wird jedoch nur der bloße Ersatz der üblichen metallischen Kontaktflächen durch optoelektronische Kontaktelemente angesprochen, wodurch die bei berührender galvanischer Kontaktierung auftretenden Probleme, beispielsweise durch Verschmutzung, vermieden werden sollen. Die optoelektronischen Elemente sind aber bei den bekannten Lösungen wieder über Anschlußleitungen mit dem integrierten Schaltkreis verbunden. Die o.g. eigentlichen Probleme werden somit nicht gelöst.

Die Aufgabe der Erfindung besteht deshalb darin, eine Identifikationskarte mit einer auf einem Halbleitersubstrat ausgebildeten integrierten Schaltung vorzuschlagen, wobei die elektronische Anordnung sowohl während des Einbaus in die Karte als auch während der Benutzung der Karte im täglichen Gebrauch, vor allem gegen mechanische Beanspruchungen, weitgehend unempfindlich ist.

Die Aufgabe wird nach Anspruch 1 dadurch gelöst, daß sämtliche Kopplungselemente monolithisch auf dem Halbleitersubstrat integriert sind.

Nach Anspruch 2 besteht die lösung der Aufgabe darin, zur Datenausgabe ein Flüssigkristallelement zur Ausgabe binärer Hell-Dunkelinformation yorzusehen, das mit den anderen optoelektronischen Elementen auf einer Seite der Substrats angeordnet ist, so daß bei großflächiger Bestrahlung sowohl die optoelektronischen Elemente, als auch die Flüssigkristallelemente beleuchet werden.

Das Substrat weist also außer dem integrierten Schaltkreis auch Elemente zur Datentransformation und Energieversorgung auf, die direkt mit dem Substrat verbunden sind. Die Schaltungseinheit ist so eine kompakte Einheit, die in einfacher Weise, z.B. in ein beliebig gestaltetes Identifikations-Element, wie eine Identifikations-Karte, Münze, Ring etc., eingebracht werden kann und aufgrund nicht vorhandener Anschlußleitungen im Gebrauch einen äußerst störungsfreien Betrieb gewährleistet. Schließlich bietet die kompakte Ausführungsform weitere Möglichkeiten zur Miniaturisierung derartiger Schaltungseinheiten, wodurch sich Anwendungsfälle ergeben, die bisher bekannten Schaltungseinheiten verschlossen waren.

Zur Realisierung der Kopplungselemente im Sinne der Erfindung bieten sich eine Vielzahl von Möglichkeiten. So können beispielsweise zur Energieübertragung auf dem Substrat integrierte Lichtwandler, wie Fotoelemente, vorgesehen werden, die bei Lichteinfall den für den Schaltkreis notwendigen Strom liefern. Die Aufnahme und auch die Ausgabe von Daten kann ebenfalls auf optischem Weg erfolgen, wobei beispielsweise für die Datenausgabe eine Flüssigkristallanzeige verwendet wird und für die Datenaufnahme entsprechende lichtempfindliche Elemente, wie Fotodioden. Die Daten können auch kapazitiv eingegeben bzw.

Entscheidend ist für alle Ausführungsformen, daß die Kopplungselemente ohne jegliche Anschlußleitungen in direktem Kontakt mit dem Substrat stehen.

Weitere Vorteile und Weiterbildungen der Erfindung sind Gegenstand von Unteransprüchen. Nachfolgend werden Ausführungsbeispiele der Erfindung anhand der beigefügten Zeichnungen näher beschrieben. Darin zeigen:

Fig. 1a, 1b eine optisch betriebene Schaltungseinheit in der Draufsicht und im Schnitt,

Fig. 2a die Schaltungseinheit aus Fig. 1, eingebaut in eine Identifikationskarte,

Fig. 2b die Identifikationskarte aus Fig. 2a in einem Kontrollgerät,

Fig. 3 eine optisch betriebene Schaltungseinheit mit der Möglichkeit der Dateneingabe,

Fig. 4a, 4b die Lichtspektren der Beleuchtungsquellen für Energieversorgung und Dateneingabe für die Schaltungseinheit aus Fig. 3,

Fig. 4c, 4d die Dämpfungsverläufe der Filter zur Abdeckung des Dateneingabebereichs und des Energieversorgungsbereichs,

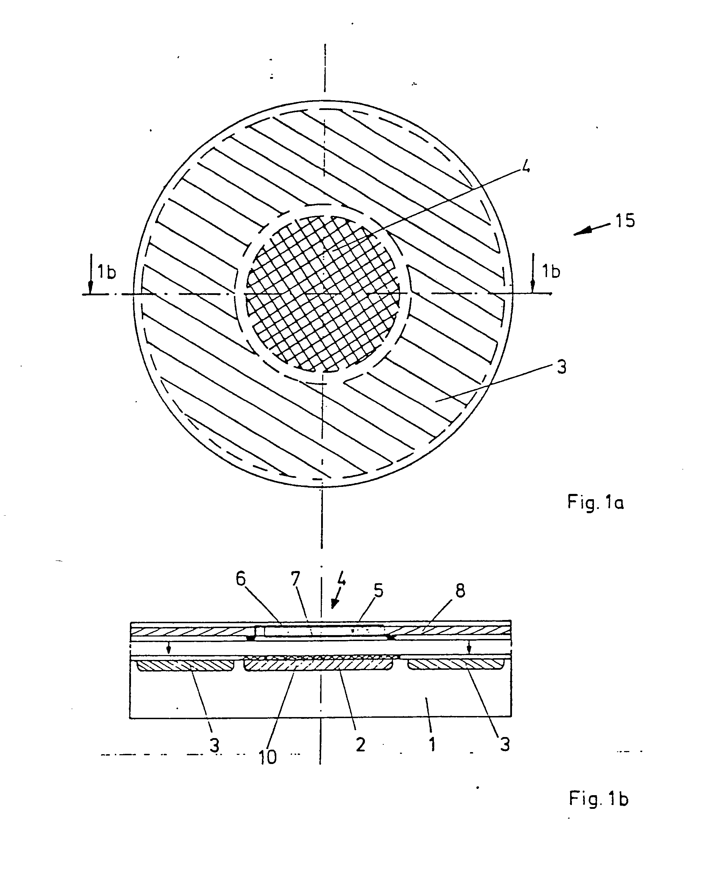

Fig. 1a und 1b zeigen eine Schaltungseinheit 15 gemäß der Erfindung in einer schematischen, stark vergrößerten einfachen Ausführungsform. Dies kann beispielsweise eine Schaltungseinheit sein, die über lichtelektrische Wandler mit Energie versorgt wird und die außerdem Elemente besitzt, mit deren Hilfe während des Betriebs das Ausgeben bestimmter Informationen möglich ist. Eingebaut in eine Identifikationskarte läßt sich die Schaltungseinheit beispielsweise zur Speicherung eines Codewortes nutzen, so daß die Karte als elektronischer Schlüssel zur Zugangskontrolle oder dergl. genutzt werden kann.

Wie aus der Darstellung in der Fig. 1b hervorgeht, befindet sich auf einem Siliziumplättchen 1 (Substrat) eine in bekannter Weise hergestellte integrierte Schaltung 2. Die integrierte Schaltung 2 bedeckt nur einen geringen Teil des Plättchens 1. In die verbleibende Fläche sind lichtempfindliche Halbleiter, beispielsweise Fotoelemente 3, integriert, die in bekannter Weise abhängig von der auffallenden Strahlungsleistung die für den Betrieb der integrierten Schaltung notwendige Energie liefern. Verbunden werden die Elemente untereinander und mit der integrierten Schaltung mit Hilfe von Leitstegen, die, wie bei der Herstellung von integrierten Schaltkreisen üblich, auf das Plättchen 1 aufgedampft werden.

Die Daten werden über sogenannte Flüssigkristallelemente 4, die heute vielfach als Anzeigeelemente Verwendung finden, ausgegeben. Das Flüssigkristallelement besteht aus einer Flüssigkristallschicht 5, die zwischen zwei lichtdurchlässigen Elektroden 6, 7 in einem Rahmen 8 eingeschlossen ist. Der Rahmen 8 ist der Größe des Siliziumplättchens 1 angepaßt. Wie bekannt, haben Flüssigkristallschichten die Eigenschaft, bei äußerst geringem Energieverbrauch ihre Lichtdurchlässigkeit zu ändern, sobald man an die beidseitig der Schicht angebrachten leitenden Belege 6, 7 ein elektrisches Feld anlegt. So erscheint die beleuchtete Flüssigkristallschicht einem Betrachter einmal milchig trüb, während sie im angeregten Zustand klar durchsichtig wird, wobei der jeweils vorhandene Untergrund, in der Fig1b eine dunkel gefärbte Schicht 10, sichtbar wird. Zur Fertigstellung der Schaltungseinheit wird der den Flüssigkristall tragende Rahmen 8 beispielsweise mit einem geeigneten Kleber fest mit dem Siliziumplättchen 1 verbunden, wobei die Elektroden 6, 7 im Durchkontaktierverfahren mit den entsprechenden Anschlüssen der integrierten Schaltung 2 zusammengefügt werden. Der Rahmen 8 ist in dem für die Fotoelemente 3 relevanten Spektralbereich lichtdurchlässig, so daß durch die Abdeckung der Fotoelemente 3 deren Funktion nicht beeinträchtigt ist. Die Anordnung des Datenausgabeelementes 4 und des Energieversorgungselementes 3 hat vor allem bei der Verwendung von Flüssigkristallelementen zur Datenausgabe den Vorteil, daß bei großflächiger Anstrahlung der Schaltungseinheit sowohl die Fotoelemente aktiviert als auch die Flüssigkristallanzeige beleuchtet wird. Der Betrieb der Schaltungseinheit ist dadurch ohne aufwendige Positionierprobleme ud ohne großen Aufwand (nur eine Beleuchtungseinheit) möglich.

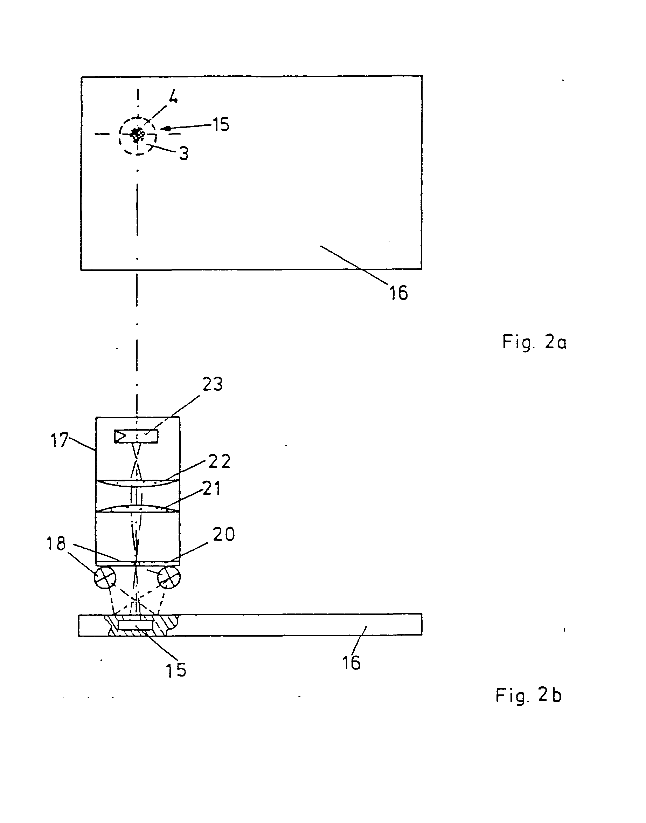

Fig. 2a zeigt eine Schaltungseinheit 15, eingebaut in eine Identifikationskarte 16. Wie oben schon erwähnt, hat die Schaltungseinheit in ihrer einfachsten Ausführungsform die Aufgabe, während eines Kontrollvorgangs lediglich eine definierte Information, beispielsweise in Form einer Identifikations-Nr., auszugeben. Die Nummer wird in einem entsprechenden, nicht flüchtigen Speicher innerhalb der Schaltungseinheit bei dessen Herstellung nach bekannten Methoden gespeichert. Wie Fig. 2b zeigt, wird die Identifikationskarte bei der Prüfung der Identifikations-Nr. unter eine Vorrichtung 17 geführt, die unter anderem eine Lichtquelle 18 zur Bestrahlung der Schaltungseinheit 15 aufweist. Aufgrund der Strahlung liefern die Fotoelemente 3 die für den Betrieb der Einheit notwendige Energie. Sobald die Schaltung betriebsbereit ist, werden die gespeicherten Informationen über das in der Fig. 1b gezeigte Flüssigkristallelement 4, das ebenfalls von der Beleuchtungsquelle bestrahlt wird, in Form von Hell-/Dunkel-Modulationen ausgegeben. Zur Auswertung der Hell-/Dunkel-Modulationen wird das Flüssigkristallelement mit Hilfe eines optischen Systems, bestehend aus einer Blende 20 und zwei Linsen 21, 22, auf einer Fotodiode 23 abgebildet. Die Justierung der Identifikationskarte innerhalb des Kontrollgerätes kann mit Hilfe entsprechender mechanischer Positionierhilfen (nicht dargestellt) durchgeführt werden.

Die in den Fig. 1a, 1b beschriebene Schaltungseinheit ist lediglich in der Lage, eine fest vorgegebene, nicht veränderbare und für jede Identifikationskarte typische Information während des Kontrollvorgangs auszugeben. Für eine Reihe von Anwendungsfällen kann es jedoch wünschenswert sein, der Schaltungseinheit auch extern Daten zuzuführen, die in der integrierten Schaltung unter Umständen mit dort gespeicherten Daten verknüpft zu einer Ausgangsinformation verarbeitet werden, oder aber die in der integrierten Schaltung Speicherzustände ändern, die deren künftiges Verhalten beeinflussen. Eine auch für diese Aufgabe geeignete Ausführungsform besteht beispielsweise darin, die extern zuzuführenden Daten über die zur Stromversorgung der Schaltungseinheit verwendeten Fotoelemente einzuspeisen. Die Schaltungseinheit kann dabei rein äußerlich den in Fig. 1a, 1b gezeigten Aufbau haben. Bei dieser Ausführungsformsetzt sich das zur Beleuchtung der Fotoelemente verwendete Licht aus einem Gleichanteil und einem die Information enthaltenden Wechselanteil zusammen, so daß die mit derart moduliertem Licht bestrahlten Fotoelemente entsprechend modulierte elektrische Signale liefern. Innerhalb der integrierten Schaltung wird der Wechselanteil über bekannte elektrische Filter ausgekoppelt und als Information gegebenenfalls nach entsprechender Verstärkung den nachfolgenden elektronischen Schaltungen zugeführt.

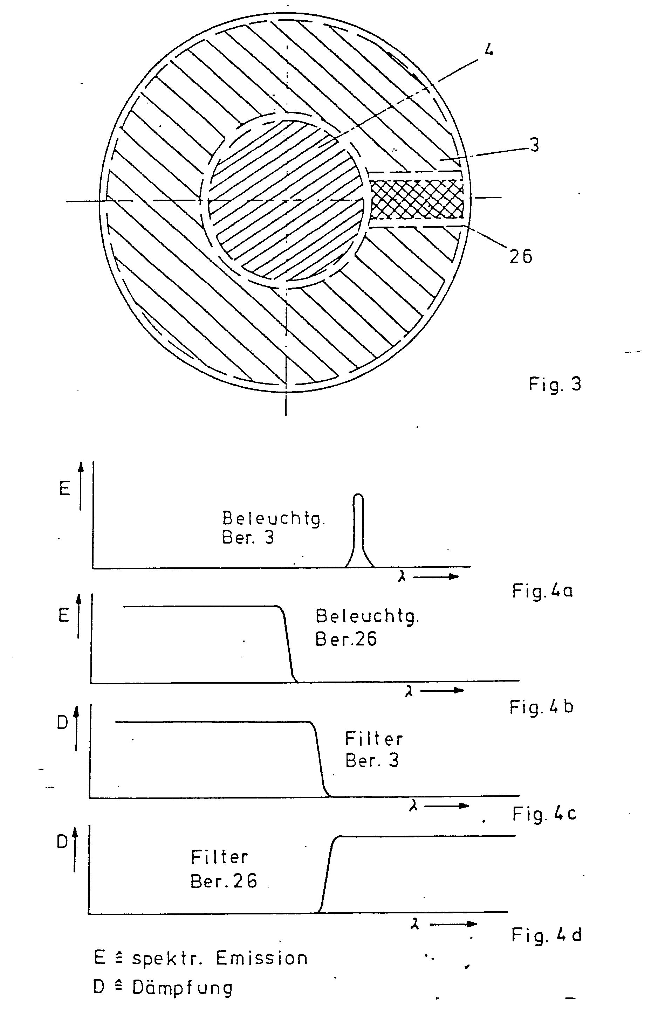

Eine andere Möglichkeit, die Schaltungseinheit extern mit Daten zu vorsorgen, ist in der Fig. 3 gezeigt. Die Oberfläche der Schaltungseinheit weist in diesem Fall ein gegenüber der Umgebung isolierten Bereich 26 auf — in der Fig. doppeltschraffiert angedeutet —, in dem in das Siliziumsubstrat eine zusätzliche Fotodiode integriert ist. Die Fotodiode wandelt das entsprechend der einzugebenden Information modulierte Licht in elektrische Signale um.

Um eine Vereinfachung im Aufbau der integrierten Schaltung zu erreichen, ist bei der letztgenannten Ausführungsform eine Trennung der Lichtströme für die Energieversorgung und die Dateneingabe sinnvoll. Dies kann beispielsweise mit Hilfe optischer Abbildungssysteme geschehen, die die Bereiche 3, 26 getrennt beleuchten.

Eine technisch einfacher zu realisierende Möglichkeit besteht darin, die Lichtströme frequenzmäßig zu trennen. Aus der Vielzahl der Möglichkeiten, die Lichtströme frequenzmäßig zu trennen, sei nachfolgend eine Ausführungsform genannt. Dabei wird der Bereich 26 für die Dateneingabe mit einem Spektrum beleuchtet, dem der IR-Anteil fehlt, während der Bereich 3 für die Energieversorgung ausschließlich mit IR-Licht beleuchtet wird. Die Versorgung des Energiebereichs mit IR-Licht nutzt die Eigenschaft von Siliziumfotoelemente gerade in diesem Bereich besonders empfindlich zu sein, so daß auch bei Fotoelementen mit kleinen Abmaßen ein guter Wirkungsgrad erzielt werden kann. Grundsätzlich kann natürlich der Bereich für die Dateneingabe umgekehrt auch mit IR-Licht oder mit Licht eines anderen Spektralbereichs beleuchtet werden. Die empfangsseitige Trennung der Lichtströme erfolgt durch entsprechende, für den jeweiligen Lichtbereich empfindliche Detektoren. Bei Verwendung physikalisch gleichwertiger Detektoren werden die Bereiche 3, 26 durch optische Filter abgedeckt, die jeweils nur für das infrage kommende Licht durchlässig sind. In den Fig. 4a—4d ist der letztgenannte Sachverhalt schematisch skizziert. Die Fig. 4a und 4b zeigen die Spektren für die Beleuchtung der Bereiche 3 (Energieversorgung) und 26 (Dateneingabe). In den Fig. 4c und 4d sind die Dämpfungsverläufe der für die Bereiche 3 und 26 zu verwendenden Filter gezeigt.

Die frequenzmäßige Trennung der Lichtströme hat gegenüber der Trennung der Lichtströme durch optische Systeme den Vorteil, daß die Identifikationskarte im Bereich der Schaltungseinheit relativ zur Größe der Schaltungseinheit großflächig bestrahlt werden kann. Eine Justierung der Beleuchtungskegel erübrigt sich damit.

In den bisher genannten Ausführungsbeispielen wurde die Datenausgabe mit Hilfe von Flüssigkristallelementen bewerkstelligt, die aufgrund des sehr geringen Energiebedarfs vorteilhaft einsetzbar sind. Die Ausführungsformen erfordern jedoch aufgrund der Verknüpfung unterschiedlicher Technologieneinen hybriden Aufbau der Schaltungseinheit. Werden auch die zur Datenausgabe notwendigen Elemente in das Silizium-Plättchen integriert, erhält man einen monolitischen Aufbau der Schaltungseinheit. Dies kann grundsätzlich dadurch erreicht werden, daß man für die Datenausgabe direkt in das Substrat integrierbare lichtemittierende Dioden verwendet, wobei allerdings der hohe Stromverbrauch dieser Elemente für spezielle Anwendungsbereiche nachteilig sein kann.

**Patentansprüche**

1. Identifikationskarte mit einer auf einem Halbleitersubstrat monolithisch integrierten Schaltung zur Bearbeitung elektrischer Signale mit optoelektronischen Kopplungselementen für die Datenein- und -ausgabe und mit optoelektronischen Kopplungselementen für die elektrische Versorgung der integrierten Schaltung, wobei die Kopplungselemente sämtlich monolithisch auf dem Halbleitersubstrat integriert sind.

2. Identifikationskarte mit einer auf einem Halbleitersubstrat monolithisch integrierten Schaltung zur Bearbeitung elektrischer Signale mit optoelektronischen Kopplungselementen für die Datenein- und- ausgabe und zur Energieversorgung, dadurch gekennzeichnet, daß

a) die optoelektronischen Elemente (3) zur Energieversorgung im Halbleitersubstrat (1) integriert sind,

b) Flüssigkristallelemente (4) zur Datenausgabe auf dem Halbleitersubstrat (1) angeordnet und mit der integrierten Schaltung (2) elektrisch verbunden sind, und

c) alle Kopplungselemente auf einer Seite des Substrats angeordnet sind, so daß bei großflächiger Bestrahlung durch eine einzige Beleuchtungseinheit sowohl die optoelektronischen Elemente, als auch die Flüssigkristallelemente beleuchtet werden,

d) die Flüssigkristallelemente (5) die Daten als binäre Hell-/Dunkelinformation ausgeben.

3. Identifikationskarte nach Anspruch 1, dadurch gekennzeichnet, daß die Kopplungselemente zur Datenausgabe lichtemittierende Dioden sind.

4. Identifikationskarte nach einem der Ansprüche 1 bis 3, dadurch gekennzeichnet, daß zur Dateneingabe und Energieübertragung ein gemeinsames optoelektronisches Element (3) vorgesehen ist und die integrierte Schaltung (15) elektrische Filter aufweist, mit deren Hilfe der Wechselanteil des aufgestrahlten Lichts auskoppelbar und als Information weiterverarbeitbar ist mal der Gleichanteil der elektrischen Versorgung dient.

5. Identifikationskarte nach einem der Ansprüche 1 bis 3, dadurch gekennzeichnet, daß zur Dateneingabe und der Energieübertragung getrennte, auf einer Seite des Substrats angeordnete optoelektronische Elemente (3, 26) vorgesehen sind.

6. Identifikationskarte nach Anspruch 5, dadurch gekennzeichnet, daß die optoelektronischen Elemente zur Dateneingabe (26) auf einem bestimmten Frequenzbereich aufgestrahlten Lichts ansprechen und die optoelektronischen Elemente zur Energieübertragung (3) auf einem anderen Frequenzbereich.

7. Verfahren zum Ein- oder Auslesen von Informationen in bzw. aus der integrierten Schaltung der Identifikationskarte nach Anspruch 5, dadurch gekennzeichnet, daß die Schaltungseinheit mittels eines optischen Abbildungssystems getrennt mit Lichtströmen bestrahlt wird.

8. Verfahren zum Einlesenvon Informationen in die integrierte Schaltung der Identifikationskarte nach Anspruch 6, dadurch gekennzeichnet, daß die Seite der integrierten Schaltung, auf der sich die Kopplungselemente zur Energieversorgung und zur Dateneingabe befinden, großflächig beleuchtet wird und die Lichtströme frequenzmäßig getrennt werden.

9. Verfahren zum Einlesenvon Informationen in die integrierte Schaltung der Identifikationskarte nach Anspruch 4, dadurch gekennzeichnet, daß die integrierte Schaltung großflächig mit Licht bestrahlt wird, das aus einem Gleichanteil und einem die Information enthaltenden Wechselanteil besteht.

**Revendications**

1. Carte d'identification comportant un circuit intégré monolithique sur un substrat semiconducteur pour traiter des signaux électriques, circuit qui présente des éléments de couplage optoélectroniques pour l'entrée et l'édition des données et qui présente des éléments de couplage optoélectroniques pour l'alimentation électrique du circuit intégré, étant précisé que les éléments de couplage sont tous intégrés de façon monolithique sur le substrat semiconducteur.

2. Carte d'identification comportant un circuit intégré monolithique sur un substrat semiconducteur pour traiter des signaux électriques, circuit qui présente des éléments de couplage optoélectroniques pour l'entrée et l'édition des données et pour l'alimentation en énergie, caractérisée en ce que

a) les éléments optoélectroniques (3) prévus pour l'alimentation en énergie sont intégrés dans le substrat semiconducteur (1),

b) des éléments à cristaux liquides (4) pour l'édition des données sont disposés sur le substrat semiconducteur (1) et électriquement reliés avec le circuit intégré (2), et

c) tous les éléments de couplage sont disposés sur une face du substrat de sorte qu'en cas d'illumination de grande surface par une unique unité d'éclairage, aussi bien les éléments optoélectroniques que les éléments à cristaux liquides soient éclairés,

d) les éléments à crisaux liquides (5) éditent les données sous forme d'information binaire clair/sombre.

3. Carte d'identification selon la revendication 1, caractérisée en ce que les éléments de couplage pour l'édition des données sont des diodes émettant de la lumière.

4. Carte d'identification selon l'une des revendications 1 à 3, caractérisée en ce qu'un élément optoélectronique commun (3) est prévu pour l'entrée des données et pour la transmission d'énergie et en ce que le circuit intégré (15) présente des filtres électriques à l'aide desquels on peut séparer la portion variable de la lumière rayonnée et en poursuivre le traitement en tant qu'information tandis que la portion constante sert à l'alimentation électrique.

5. Carte d'identification selon l'une des revendications 1 à 3, caractérisée en ce que pour l'entrée des données et pour la transmission d'énergie sont prévus des éléments optoélectroniques distincts (3, 26) disposés sur une face du substrat.

6. Carte d'identification selon la revendication 5, caractérisée en ce que les éléments optoélectroniques prévus pour l'entrée des données (26) réagissent à une plage de fréquence déterminée de la lumière rayonnée et que les éléments optoélectroniques prévus pour la transmission d'énergie (3) réagissent à une autre plage de fréquence.

7. Procédé pour entrer en mémoire ou lire en mémoire les informations dans ou sur le circuit intégré de la carte d'identification de la revendication 5, caractérisé en ce que l'élément de circuit est illuminé séparément avec des flux lumineux au moyen d'un système optique de formation d'image.

8. Procédé pour entrer les informations dans le circuit intégré de la carte d'identification de la revendication 6, caractérisé en ce que la face du circuit intégré sur laquelle se trouvent les éléments de couplage pour l'alimentation en énergie et pour l'entrée des données est éclairée sur grande surface et que l'on sépare les flux lumineux en fonction de la fréquence.

9. Procédé pour entrer des informations dans les circuits intégrés de la carte d'identification de la revendication 4, caractérisé en ce que le circuit intégré est illuminé, sur une grande surface, avec de la lumière qui est constituée d'une portion constante et d'une portion variable contenant l'information.

**Claims**

1. Identity card with a circuit which is monolithically integrated onto a semiconductor substrate for handling electrical signals with opto-electronic coupling elements for the data input and output and with opto-electronic coupling elements for electrical supply to the integrated circuit, the coupling elements being integrated monolithically as a whole on the semiconductor substrate.

2. Identity card with a circuit which is monolithically integrated onto a semiconductor substrate for handling electrical signals with opto-electronic coupling elements for input and output of data and for supplying energy, characterised in that,

a) the opto-electronic elements (3) for the energy supply are integrated into the semiconductor substrate (1),

b) liquid crystal elements (4) for displaying data are arranged on the semiconductor substrate (1) and connected electrically to the integrated circuit (2), and

c) all coupling elements are arranged on one side of the substrate so that with large-area illumination by a single light unit both the opto-electronic elements and also the liquid crystal elements are illuminated,

d) the liquid crystal elements (5) display the data as binary light/dark information.

3. Identity card according to Claim 1, characterised in that the coupling elements for displaying the data are light-emitting diodes.

4. Identity card according to one of Claims 1 to 3 characterised in that a common opto-electronic element (3) is provided for data input and energy transfer and the integrated circuit (15) includes electrical filters with the aid of which the alternating portion of the incident light can be extracted and handled further as information and the direct current portion serves for the electric supply.

5. Identity card according to one of Claims 1 to 3, characterised in that separate opto-electronic elements (3, 26) are provided, arranged on one side of the substrate, for data input and energy transfer.

6. Identity card according to Claim 5, characterised in that the opto-electronic elements for data input (26) respond to a predetermined frequency range of incident light and the opto-electronic elements for energy transfer (3) respond to a different frequency range.

7. Process for putting in or reading out items of information into or out of the integrated circuit of the identity card according to Claim 5, characterised in that the circuit unit is illuminated with separate light beams by means of an optical imaging system.

8. Process for putting in items of information into the integrated circuit of the identity card according to Claim 6, characterised in that the side of the integrated circuit on which the coupling elements for energy supply and data input are present, is illuminated on a large-area basis and the light beams are separated in accordance with frequency.

9. Process for putting items of information into the integrated circuit of the identity card according to Claim 4, characterised in that the integrated circuit is illuminated with light on a large-area basis, the light comprising a direct-current portion and an alternating portion, the latter containing the information.

Fig. 1a

Fig. 1b

Fig. 2a

Fig. 2b

Fig. 3

Fig. 4a

Fig. 4 b

Fig. 4 c

Fig. 4 d

E ≙ spektr. Emission
D ≙ Dämpfung